Europäisches Patentamt

European Patent Office

Office européen des brevets

(19)

(11) Veröffentlichungsnummer: **0 185 880**

**A1**

(12) ## EUROPÄISCHE PATENTANMELDUNG

(21) Anmeldenummer: 85113505.3

(22) Anmeldetag: 24.10.85

(51) Int. Cl.⁴: **E 06 B 3/26**
**B 32 B 21/08**

(30) Priorität: 09.11.84 DE 3440906

(43) Veröffentlichungstag der Anmeldung:
02.07.86 Patentblatt 86/27

(84) Benannte Vertragsstaaten: -
**DE FR GB**

(71) Anmelder: **Schock & Co. GmbH**
**Gmünder Strasse 65**
**D-7060 Schorndorf(DE)**

(72) Erfinder: **Schock, Friedrich**
**Alte Steige 34**
**D-7060 Schorndorf(DE)**

(72) Erfinder: **Schock, Karl**
**Aichenbachstrasse 136**
**D-7060 Schorndorf(DE)**

(74) Vertreter: **Hoeger, Stellrecht & Partner**
**Uhlandstrasse 14c**
**D-7000 Stuttgart 1(DE)**

(54) **Profilleiste zur Herstellung von Fensterrahmen oder dergleichen.**

(57) Profilleiste zur Herstellung von Fensterrahmen, welche einen Holzkern (12), der aus in Profillängsrichtung verlaufenden, miteinander verleimten Schichten 14a, 14b, 16a, 16b) zusammengesetzt ist, und einen auf den Holzkern (12) aufextrudierten Kunststoffmantel (10) aufweist. Um einen Verzug einer solchen Profilleiste und ein Quellen des Holzkerns (12) infolge durch den Kunststoffmantel (10) hindurch diffundierender Feuchtigkeit zu vermeiden, wird der Holzkern (12) so gestaltet, daß er massiv ausgebildet ist und in ihm die Faserrichtung der Schichten abwechselnd in Profillängsrichtung und quer dazu verläuft und daß in einem überwiegenden Teil der Holzkern-Querschnittsfläche die Faserrichtung in Profillängsrichtung verläuft.

Croydon Printing Company Ltd.

A 0378 b
15. Oktober 1985
b-204

Anmelder: Schock & Co. GmbH
            Gmünder Strasse 65
            7060 Schorndorf

Profilleiste zur Herstellung von
Fensterrahmen oder dergleichen

Die Erfindung betrifft eine Profilleiste zur Herstellung
von Fensterrahmen, welche einen Holzkern, der aus in
Profillängsrichtung verlaufenden, miteinander verleimten
Schichten zusammengesetzt ist, und einen auf den Holzkern
aufextrudierten Kunststoffmantel aufweist.

Bei einer bekannten derartigen Profilleiste (DE-OS
25 03 354) besitzt der Holzkern die Gestalt eines im Querschnitt ungefähr rechteckigen Hohlprofils, das aus vier
miteinander verleimten Schichtholzleisten zusammengesetzt
ist. Die Richtung, in der die Holzfasern in den einzelnen
Holzschichten verlaufen, wurde dabei offengelassen. Aus
derartigen Profilleisten zusammengesetzte Rahmen für
Fenster, verglaste Türen und dergleichen, befriedigen aber
hinsichtlich des Verzugs und der Quellung nicht in jedem
Falle: Da ein einfacher Kunststoffmantel keine Dampfsperre
bildet, wurden bei der bekannten Profilleiste teilweise
Schichtholzleisten verwendet, die zwischen der äussersten
und der benachbarten Holzschicht eine dampfdichte Aluminiumfolie enthalten. Diese Massnahme verteuert nicht nur die
Herstellung, sondern durch sie lässt sich auch nicht verhindern, dass an den Schmalseiten der Schichtholzleisten
Feuchtigkeit durch den Kunststoffmantel hindurch und in
das Holz hineindiffundiert. Dies kann nicht nur zu einem

-3-

Verzug der aus den bekannten Profilleisten hergestellten
Fensterrahmen, sondern zum Platzen des Kunststoffmantels
infolge quellenden Holzes führen.

Der Erfindung lag die Aufgabe zugrunde, eine billig herzustellende Profilleiste mit einem Kunststoff-ummantelten
Holzkern zur Herstellung von Fensterrahmen und dergleichen
zu schaffen, bei der eine Feuchtigkeitsaufnahme des Holzes
nicht zu einem Aufreissen des Kunststoffmantels infolge
einer sich vergrössernden Querschnittsfläche des Holzkern
führt.

Nun weisen derartige Profilleisten im allgemeinen zumindest
in einem Querschnittsbereich unterschiedliche Abmessungen
in zur Profillängsrichtung sowie zueinander senkrechten
Richtungen auf. Deshalb wird bei der Lösung der gestellten
Aufgabe von einer Profilleiste der eingangs erwähnten Art
ausgegangen, deren Querschnitt mindestens einen Querschnittsbereich aufweist, dessen Abmessung in einer ersten Richtung
quer zur Profillängsrichtung grösser als in einer hierzu
senkrechten zweiten Richtung quer zur Profillängsrichtung ist.
Zur Lösung der gestellten Aufgabe wird nun eine solche Profilleiste erfindungsgemäss so ausgebildet, daß in dem massiv
ausgebildeten Holzkern die Faserrichtung der Schichten abwechselnd in Profillängsrichtung und quer dazu verläuft und
daß diejenige(n) Schicht(en) des genannten Querschnittsbereichs, in der bzw. denen die Faserrichtung quer zur Profillängsrichtung verläuft, sich im Profilquerschnitt in der
ersten Richtung erstreckt bzw. erstrecken.

Bei der erfindungsgemässen Lösung macht man von dem Umstand Gebrauch, daß Holz durch Aufnahme bzw. Abgabe von Feuchtigkeit in Richtung der Holzfaser nur um ca. 0,5 % quillt bzw. schwindet, quer zur Faserrichtung (tangential bzw. radial zu dem zu Schichtholz verarbeiteten Baumstamm) jedoch um ca. zwischen 5 % und ca. 9 %. Durch die bezüglich der Faserrichtung kreuzweise miteinander verleimten Schichten des Holzkerns weist dieser Schichten auf, die sowohl in Längsrichtung der Profilleiste als auch quer hierzu in Richtung der grössten Querschnittserstreckung geringe Quellwerte der Profilleiste gewährleisten.

Gegenüber den heute auf dem Markt üblichen Profilleisten zur Herstellung von Fensterrahmen mit Massivholzkern in einem Kunststoffmantel besitzt die erfindungsgemässe Profilleiste noch einen weiteren, für die Herstellungskosten wesentlichen Vorteil: Für die gängigen Profilleisten mit Massivholzkern wird das Profil des letzteren aus Vollmaterial herausgearbeitet. Dies führt zu einer schlechten Materialausbeute, während bei der Herstellung der erfindungsgemässen Profilleiste der Holzkern so aus miteinander verleimten Schichten zusammengesetzt wird, daß er zumindest in einer Dimension nicht mehr bearbeitet werden muss.

Bezüglich des Verziehens eines Fensterrahmens kommt es besonders darauf an, daß sich die Länge der Rahmenschenkel nicht wesentlich verändert. Deshalb verläuft bei einer besonders bevorzugten Ausführungsform der erfindungsgemässen Profilleiste die Faserrichtung in einem überwiegenden Teil der Holzkernquerschnittsfläche in Profillängsrichtung, um so Längenänderungen der Profilleiste auf ein Minimum zu begrenzen.

Um bei einem Holzkern, bei dem in den einander benachbarten
Schichten die Faserrichtungen ungefähr senkrecht zueinander
verlaufen, zu gewährleisten, daß in einem überwiegenden Teil
der Holzkernquerschnitssfläche die Faserrichtung in Längsrichtung der Profilleiste verläuft, weisen bei einer
bevorzugten Ausführungsform der erfindungsgemässen
Profilleiste die Schichten abwechselnd eine grössere und
eine kleinere Dicke auf, wobei die Faserrichtung in den
dickeren Schichten in Profillängsrichtung verläuft. Hieraus
ergibt sich, dass es auch als unter die Erfindung fallend
anzusehen ist, wenn der Holzkern nur zwei z.B. gleich dicke
Schichten mit senkrecht aufeinanderstehendem Faserverlauf
umfasst, obwohl Holzkerne mit mindestens drei Schichten
bevorzugt werden, von denen zwei, in denen die Fasern in
Längsrichtung der Profilleiste verlaufen, gleich stark
sein können.

Der Herstellung von Fensterrahmen dienende, massive und
aus Schichtholz bestehende Profilleisten sind bekannt.
So zeigt die US-PS 2 571 696 einen Fensterrahmen, welcher
im wesentlichen aus einer zum Rahmen gebogenen Profilleiste
besteht, welche von miteinander verleimten Holzschichten
gebildet wird; auch bei dieser Profilleiste bleibt der
Faserverlauf offen. Anders bei der Profilleiste nach der
DE-PS 29 41 012, bei der in allen miteinander verleimten
Schichten die Faserrichtung mit der Längsrichtung der
Profilleiste zusammenfällt, so dass sich diese bekannte
Profilleiste von der erfindungsgemässen nicht nur dadurch
unterscheidet, dass ein aufextrudierter Kunststoffmantel
nicht vorhanden ist, sondern dass der Quellwert quer zur
Profilleistenlängsrichtung unter Umständen so gross ist,
dass ein auf die bekannte Profilleiste aufextrudierter
Kunststoffmantel im Gebrauch platzen würde.

Weitere Merkmale, Vorteile und Einzelheiten der Erfindung
ergeben sich aus der beigefügten Querschnittszeichnung

-6-

sowie der nachfolgenden Beschreibung einer Ausführungsform
der erfindungsgemässen Profilleiste.

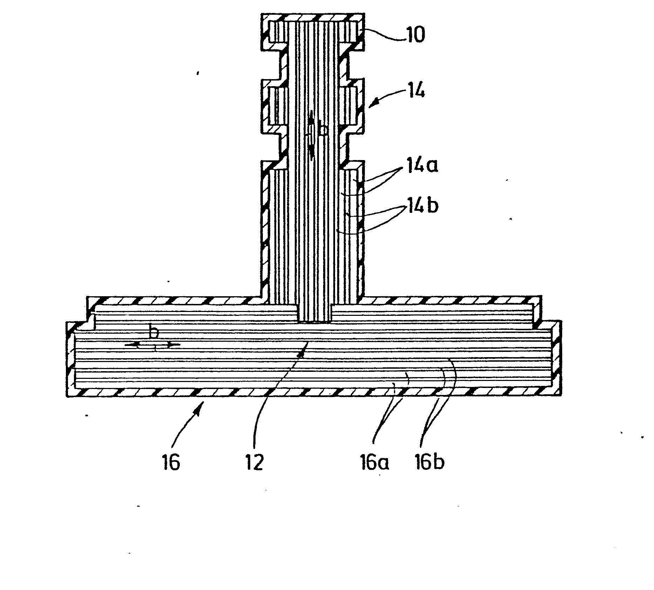

Die Zeichnung zeigt einen mit einem Kunststoffmantel 10
ummantelten, massiven Holzkern 12, welcher aus einem ersten
und einem zweiten Querschnittsschenkel 14 bzw. 16 zusammengesetzt ist. Der Kunststoffmantel 10 besteht aus einem
extrudierbaren Kunststoff, welcher, gegebenenfalls unter
Verwendung eines Heißschmelzklebers, beim Aufextrudieren
auf den Holzkern 12 fest mit diesem verbunden wurde. Wie
dargestellt, sind die beiden Querschnittsschenkel über
eine Art von Nut- und -Feder-Verbindung ineinandergesteckt
und dann miteinander verklebt.

Erfindungsgemäss bestehen die beiden Querschnittsschenkel
aus miteinander verleimten Holzschichten, und zwar aus
dickeren Schichten 14a bzw. 16a sowie dünneren Schichten
14b bzw. 16b, welche abwechselnd aufeinanderfolgen. In den
dickeren Schichten 14a bzw. 16a sollen die Holzfasern in
Längsrichtung der Profilleiste, d.h. senkrecht zur
Zeichnungsebene, verlaufen, während in den dünneren Schichten 14b bzw. 16b der Verlauf der Holzfasern durch Doppelpfeile b angedeutet wurde - in den dünneren Schichten verläuft die Faserrichtung also in Richtung der grösseren
Querschnittsabmessung des betreffenden Querschnittsschenkels.

Wenn vorstehend von "grösster Querschnittserstreckung"
oder davon die Rede ist, daß in einem Querschnittsbereich der Profilleiste die Abmessung in einer ersten
Richtung quer zur Profillängsrichtung grösser als in
einer hierzu senkrechten zweiten Richtung quer zur Profillängsrichtung ist, so soll unter der "ersten Richtung"
bzw. der Richtung der "grössten Querschnittserstreckung"
natürlich nur eine solche Richtung verstanden werden,
in der man im Hinblick auf die Querschnittsform der
Profilleiste die Schichtebenen vernünftigerweise verlaufen lässt - bei einem rechteckigen Querschnitt
würde man die Schichtebenen ja nicht in Richtung einer
Diagonalen verlaufen lassen, obwohl in dieser Richtung
der Querschnitt seine grösste Abmessung besitzt.

A 0378 b
15. Oktober 1985
b-204

Anmelder: Schock & Co. GmbH
Gmünder Strasse 65
7060 Schorndorf

# A N S P R Ü C H E

1. Profilleiste zur Herstellung von Fensterrahmen oder dergleichen, deren Querschnitt mindestens einen Querschnittbereich aufweist, dessen Abmessung in einer ersten Richtung quer zur Profillängsrichtung grösser als in einer hierzu senkrechten zweiten Richtung quer zur Profillängsrichtung ist und welche einen Holzkern, der aus in Profillängsrichtung verlaufenden, miteinander verleimten Schichten zusammengesetzt ist, und einen auf den Holzkern aufextrudierten Kunststoffmantel aufweist, dadurch gekennzeichnet, daß in dem massiv ausgebildeten Holzkern (12) die Faserrichtung der Schichten (14a, 14b bzw. 16a, 16b) ungefähr parallel zu den Schichtebenen abwechselnd in Profillängsrichtung und quer dazu verläuft und daß diejenige(n) Schicht(en) (14b bzw. 16b) des genannten Querschnittsbereichs (14 bzw. 16), in der bzw. denen die Faserrichtung quer zur Profillängsrichtung verläuft, sich im Profilquerschnitt in der ersten Richtung erstreckt bzw. erstrecken.

2. Profilleiste nach Anspruch 1, dadurch gekennzeichnet, daß in einem überwiegenden Teil der Holzkernquerschnittsfläche die Faserrichtung in Profillängsrichtung verläuft.

3. Profilleiste nach Anspruch 1 oder 2, dadurch gekennzeichnet, daß die Schichten (14a, 14b bzw. 16a, 16b) abwechselnd eine grössere und eine kleinere Dicke aufweisen und daß die Faserrichtung in den dickeren Schichten (14a bzw. 16a) in Profillängsrichtung verläuft.

-2-

1/1

0185880

10

14

14a

14b

b

16   12   16a 16b

Schock & Co. GmbH   Gmünder Straße 65   7060 Schorndorf
HOEGER, STELLRECHT & PARTNER
Patentanwälte in Stuttgart

A46 351 b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | GB-A-2 026 125 (HEWITT) * Seite 1, Zeilen 111-119; Figuren 6,7 * | 1 | E 06 B 3/26 B 32 B 21/08 |
| | --- | | |
| Y | FR-A- 850 215 (SOCIETE NOUVELLE DES BOIS) * Seite 2, Zeilen 51-55,67-76; Seite 3, Zeilen 31,32; Figuren 3,4 * | 1 | |
| | --- | | |
| A | GB-A- 503 166 (COX) * Seite 1, Zeile 18 - Seite 2, Zeile 111; Figur * | 1-3 | |
| | --- | | |
| A | FR-A-1 033 564 (VANNEYRE) * Seite 1, Spalte 2, Absatz 1; Seite 2, Spalte 1, Absätze 2-6, Spalte 2, Absätze 2-5; Figuren 1-3 * | 1 | |
| | ----- | | RECHERCHIERTE SACHGEBIETE (Int Cl 4) E 06 B E 04 C B 27 D |

Der vorliegende Recherchenbericht wurde für alle Patentansprüche erstellt

| Recherchenort DEN HAAG | Abschlußdatum der Recherche 17-02-1986 | Prüfer DEPOORTER F. |
|---|---|---|